# FASCICULE DE BREVET EUROPEEN

(11) **EP 3 063 932 B1**
(45) Date de publication et mention de la délivrance du brevet: **27.09.2017**
(21) Numéro de dépôt: 14790603.6
(22) Date de dépôt: 29.10.2014
(51) Int. Cl.: G01T 1/20, H04N 5/217, H04N 5/321, H04N 5/325, H04N 5/359

(54) **PROCEDE DE TRAITEMENT DE SIGNAUX COLLECTES PAR DES PIXELS D'UN DETECTEUR**
VERFAHREN ZUR VERARBEITUNG VON DURCH PIXEL EINES DETEKTORS GESAMMELTEN SIGNALEN
METHOD FOR PROCESSING SIGNALS COLLECTED BY PIXELS OF A DETECTOR

(30) Priorité: 29.10.2013 FR 1360567
(43) Date de publication de la demande: 07.09.2016
(73) Titulaire: Commissariat à l'Énergie Atomique et aux Énergies Alternatives, 75015 Paris (FR); Trixell, 38430 Moirans (FR)
(72) Inventeur: HABIB, Amr, F-38100 Grenoble (FR); ARQUES, Marc, F-38100 Grenoble (FR)
(74) Mandataire: Collet, Alain
(86) Numéro de dépôt international: PCT/EP2014/073194
(87) Numéro de publication internationale: WO 2015/063134

(56) Documents cités:
- JP-A- 2003 215 248
- US-A- 5 812 629
- US-A1- 2008 251 730
- US-A1- 2010 144 291

## Description

L'invention concerne un procédé de traitement de signaux collectés par des pixels d'un détecteur.

L'invention trouve une application particulière dans un détecteur de rayonnement électromagnétique utilisé pour l'imagerie. Ce type de détecteur comprend un grand nombre de points photosensibles appelés pixels généralement organisés en matrice ou en barrette. Un pixel représente l'élément sensible élémentaire du détecteur. Chaque pixel convertit le rayonnement électromagnétique auquel il est soumis en un signal électrique.

Les signaux électriques issus des différents pixels sont collectés lors d'une phase de lecture de la matrice puis numérisés de manière à pouvoir être traités et stockés pour former une image. Les pixels sont formés d'une électrode collectant des charges, et d'un circuit électronique de traitement du signal électrique ainsi créé. D'une façon générale, dans chaque pixel, l'électrode de collecte est associée à un circuit électronique, constitué par exemple d'interrupteurs, capacité, résistances, en aval duquel est placé un actionneur. L'ensemble constitué l'électrode de collecte et le circuit électronique permet de générer des charges électriques et de les collecter. Chaque pixel est relié à un circuit de lecture permettant de lire la quantité de charge collectée et la transférer à un moyen de traitement. Ce type de détecteur de rayonnement peut être utilisé pour l'imagerie de rayonnements ionisants, et notamment les rayonnements X ou γ, dans le domaine médical ou celui du contrôle non destructif dans le domaine industriel, pour la détection d'images radiologiques.

Dans ce cas, le détecteur comprend un matériau détecteur, de type scintillateur ou semi-conducteur, apte à interagir avec un rayonnement incident de type X ou γ,

Lorsque le matériau détecteur est un semi conducteur, par exemple de type CdTe, CdZnTe, Hgl₂, une interaction d'un photon incident dans le détecteur génère la création de porteurs de charges de type électrons-trous. Dans ce cas, chaque pixel comporte une électrode de collecte apte à collecter une partie des porteurs de charge résultant de l'interaction. On parle de détecteur à conversion directe, car les charges collectées par les électrodes de collecte sont crées par l'interaction du rayonnement à détecter dans le matériau détecteur.

Lorsque le matériau détecteur est un scintillateur, par exemple un scintillateur inorganique de type Csl, Nal, LaBr₃, une interaction d'un photon incident génère une pluralité de photons, moins énergétiques que le photon incident, dont la longueur d'onde est généralement située dans le domaine visible. Dans ce cas, chaque pixel comporte un photodétecteur, par exemple une photodiode, qui détecte ces photons et les convertit en charges électriques, lesquelles sont collectées par une électrode de collecte. On parle de détecteur à conversion indirecte car les charges collectées par les électrodes de collecte ne sont pas directement issues de l'interaction du rayonnement incident dans le matériau détecteur, mais issues de la détection des photons visibles générés lors de l'interaction.

Les imageurs de photons, et en particulier les imageurs de photons X ou γ, comportent un matériau détecteur (semi-conducteur ou scintillateur), couplé à des pixels, ces derniers étant généralement disposés selon une matrice. La quantité de charge collectée par chaque pixel donne une information sur la localisation de l'interaction ainsi que sur l'énergie des photons ayant interagi dans le détecteur.

Or, chaque interaction génère un grand nombre de particules (photons dans le cas de scintillateur, paires électrons-trous dans le cas d'un semi-conducteur), lesquelles subissent une dispersion spatiale dans le matériau détecteur, et migrent vers différents pixels adjacents.

Les conséquences de cette dispersion sont une dégradation de la résolution spatiale, car plusieurs pixels adjacents sont impactés, et une estimation moins précise de l'énergie du photon incident. On parle de dégradation de la résolution en énergie.

Pour pallier ce problème, une solution a été proposée dans le brevet US 7,667,205. Cette solution consiste à définir des groupes de pixels centrés autour d'un pixel cible. Chaque groupe contient le pixel cible et quelques pixels avoisinants. On calcule une somme de signaux de sortie de chacun des groupes et on compare ces sommes en calculant des différences entre ces sommes. Le groupe ayant la somme la plus forte permet de définir le pixel ayant reçu le photon. Enfin, on affecte à ce pixel cible la somme calculé pour son groupe.

De plus, US 2008/0251730 A1 divulge un procédé de traitement de signaux collectés par des pixels d'un détecteur.

Les demandeurs de la présente demande de brevet se sont rendu compte que cette solution présente un inconvénient. En effet, les groupes de deux pixels cibles voisins ont obligatoirement des pixels communs. Lors de la comparaison des sommes de signaux de sortie de différents groupes voisins, les valeurs des signaux des pixels en commun s'annulent. La comparaison peut ne pas prendre en compte le pixel dont le signal de sortie est le plus fort. Ceci entraine des imprécisions dans la localisation du pixel ayant reçu la plus grande quantité de signal. Des étapes supplémentaires sont nécessaires pour définir la position de l'interaction avec plus de précision. De plus, cela entraîne un grand nombre d'opérations de traitement des signaux collectés par chaque pixel, en particulier l'addition des signaux des pixels d'un même groupe, puis la soustraction des signaux de chaque groupe.

L'invention vise à améliorer la localisation d'une interaction dans le détecteur et à améliorer la résolution en énergie, par un procédé simplifié, permettant de minimiser le nombre d'opérations à mettre en oeuvre et à améliorer la fiabilité de l'information affectée au pixel cible retenu après comparaison.

A cet effet, l'invention a pour objet un procédé de traitement de signaux collectés par des pixels d'un détecteur selon la revendication 1. Chacun des groupes de comparaison est formé de pixels situés au voisinage d'un pixel donné, le pixel donné étant le pixel touché pour le premier groupe de comparaison et un pixel adjacent pour le deuxième groupe de comparaison associé à ce pixel adjacent. Les groupes de comparaison sont prédéterminés. Autrement dit, chacun des groupes de comparaison comprend des pixels organisés selon un motif. Les motifs des différents groupes sont prédéterminés de façon à ne pas avoir de pixels en commun.

Le seuil permettant d'identifier le pixel touché est un seuil prédéterminé.

Avantageusement, chaque groupe de comparaison comprend le même nombre de pixels.

Le signal collecté par un groupe de comparaison peut notamment être une somme, pondérée ou non, du signal généré par chaque pixel constituant ledit groupe. Dans le cas d'une somme pondérée, chaque pixel du groupe de comparaison peut être affecté d'un coefficient de pondération dépendant de la distance entre ledit pixel et le pixel touché.

En cas d'égalité lors d'une comparaison, on peut utiliser une règle de priorité prédéfinie, pour définir arbitrairement le groupe de comparaison ayant accumulé la quantité la plus importante de signal parmi les groupes de comparaison ayant participé à la comparaison.

Selon un mode de réalisation, les groupes de comparaison sont organisés selon un motif de pixels et, pour deux pixels distincts donnés, le motif de leur groupe de comparaison varie en fonction de l'orientation relative des deux pixels.

On peut alors attribuer, au pixel gagnant, une valeur de signal fonction des valeurs de signal collecté par les pixels d'un groupe de pixels appelé groupe d'attribution, les pixels du groupe d'attribution comportant des pixels adjacents du pixel gagnant.

Ce groupe d'attribution peut être identique au groupe de comparaison associé au pixel gagnant. On peut aussi inclure dans le groupe d'attribution un groupe de pixels adjacents du pixel gagnant.

Le signal généré par le groupe d'attribution peut être une somme, pondérée ou non, des signaux générés par chaque pixel constituant ledit groupe d'attribution. Dans le cas d'une somme pondérée, chaque pixel du groupe d'attribution peut être affecté d'un coefficient de pondération dépendant de la distance entre ledit pixel et le pixel gagnant.

Le groupe d'attribution peut comprendre plus ou moins de pixels que le groupe de comparaison.

L'invention sera mieux comprise et d'autres avantages apparaîtront à la lecture de la description détaillée d'un mode de réalisation donné à titre d'exemple, description illustrée par le dessin joint dans lequel :
la figure 1 représente un exemple de détecteur de rayonnement à l'état solide ;
la figure 2 représente électriquement les composants de détecteur de rayonnement ;
les figures 3a à 3e permettent d'illustrer un exemple de groupes de pixels du détecteur que l'on compare afin de déterminer un centre d'impact sur le détecteur ;
les figures 4a à 4e permettent d'illustrer un autre exemple de groupes de pixels ;
les figures 5a à 5e permettent d'illustrer un exemple de groupes de pixels dans lequel le motif des groupes est variable ;
les figures 6a à 6e permettent d'illustrer un autre exemple de groupes de pixels dans lequel le motif des groupes est variable
les figures 7a à 7c et les figures 8a et 8b illustrent un avantage de l'invention.

Par souci de clarté, les mêmes éléments porteront les mêmes repères dans les différentes figures.

L'invention est décrite en rapport à un détecteur de rayonnement ionisant, en particulier un rayonnement X ou gamma dans lequel un capteur est associé à un scintillateur. Il est également possible de mettre en oeuvre l'invention dans un détecteur de type semi-conducteur. De façon plus générale, l'invention peut être mise en oeuvre dans tout détecteur possédant des éléments sensibles discrets organisés en matrice, le détecteur étant susceptible de détecter un phénomène physique que l'on souhaite détecter et localiser. L'invention présente un intérêt dès lors que le phénomène physique subit une dispersion spatiale, et soit susceptible d'impacter plusieurs éléments sensibles voisins.

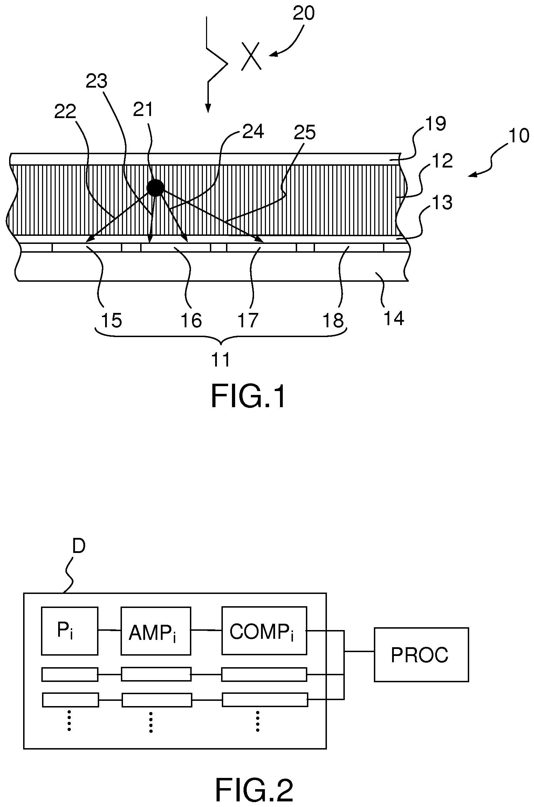

La figure 1 représente schématiquement en coupe un exemple de détecteur de rayonnement à l'état solide 10 comportant un capteur 11 photosensible à l'état solide associé à un scintillateur 12. Le capteur 11 et le scintillateur 12 sont fixés l'un de l'autre à l'aide de colle 13 qui réalise aussi un couplage optique. Le capteur 11 comporte sur un substrat isolant 14 des pixels Pᵢ généralement constitués de d'éléments photosensibles, de type photodiode, phototransistor ou photorésistance. Dans l'exemple représenté, quatre pixels 15, 16, 17 et 18 sont représentés. Il est bien entendu qu'un détecteur selon l'invention peut comprendre un grand nombre d'éléments photosensibles. Le scintillateur 12 est recouvert d'une fenêtre d'entrée 19.

Le détecteur 10 est soumis à un rayonnement X 20 traversant la fenêtre d'entrée 19 pour atteindre le scintillateur 12 dont la fonction est de convertir le rayonnement X en un rayonnement secondaire de longueur d'onde plus grande pouvant être détecté par les éléments photosensibles. Le rayonnement secondaire est par exemple un rayonnement visible ou proche du visible. Un photon X 21 issu du rayonnement 20 est représenté dans le scintillateur 12 qui absorbe le photon 21 et émet plusieurs photons secondaires en réponse. Dans la pratique un seul photon X peut générer quelques centaines à quelques milliers de photons visibles. Sur la figure 1, à titre d'exemple, quatre photons visibles 22, 23, 24 et 25 sont représentés. Le photon 22 atteint le pixel 15, les photons 23 et 24 atteignent le pixel 16, et le photon 25 atteint le pixel 17.

L'invention permet de déterminer avec précision le pixel ayant reçu le plus grand nombre de photons visibles, en l'occurrence le pixel 16, tout en minimisant les opérations de traitement du signal. Géométriquement, le photon X 21 est situé au dessus du pixel 16. Le pixel 16 permet donc de localiser la position du photon X 21. De plus, l'invention permet de déterminer l'énergie du photon X 21 en comptant le nombre total de photons visibles issus du photon X 21.

Un tel détecteur peut fonctionner en mode comptage, et de préférence pour des applications de type spectrométrie, pour lesquelles on s'intéresse non seulement au lieu de l'interaction, mais également à l'amplitude du signal collecté par les pixels du détecteur.

La figure 2 présente un exemple de schéma électrique d'un détecteur.

Lorsqu'un pixel Pᵢ d'un détecteur D collecte des charges électriques, le circuit de lecture AMPᵢ met en forme le signal, en générant une impulsion dont l'amplitude dépend de la charge collectée. Lorsque cette impulsion dépasse un seuil Si prédéterminé, le signal du pixel est transmis à un circuit de traitement PROC, pour la mise en oeuvre du procédé objet de l'invention, et décrit ci-dessous. La comparaison du signal généré par le pixel par rapport au seuil Si est réalisé par un discriminateur d'amplitude COMPᵢ intégré au pixel.

Le circuit de traitement PROC peut être un circuit déporté du détecteur D, traitant des signaux sous forme numérique. Alternativement, il peut être également intégré au détecteur D, chaque pixel Pᵢ pouvant par exemple comprendre un circuit de traitement élémentaire PROCᵢ.

Comme on l'a vu précédemment les particules libérées dans le détecteur lors de l'interaction d'un photon X peuvent être détectées par plusieurs pixels Pᵢ adjacents du détecteur 10. Le procédé selon l'invention vise à identifier précisément le pixel le plus proche de l'interaction dans le détecteur, tout en minimisant le nombre de calcul à mettre en oeuvre. Cela permet en particulier de réduire le temps de traitement ainsi que la consommation du détecteur.

Pour ce faire, à chaque pixel Pᵢ du détecteur est associé un groupe de pixels, dit groupe de comparaison Cᵢ. Chacun des groupes de comparaison Cᵢ est formé de pixels situés au voisinage d'un pixel donné. Chaque pixel, associé à un groupe de comparaison, forme un centre d'impact candidat. L'objet des traitements qui suivent est de déterminer le centre d'impact réel parmi les centres d'impact candidats. Cette détermination se fait par comparaison des signaux collectés par différents groupes de comparaison avec le groupe de comparaison associé au pixel. Les différents groupes comparés sont associés à des pixels adjacents. Selon l'invention, chaque groupe de comparaison associé à deux pixels adjacents ne comporte pas de pixel en commun.

Lorsqu'un pixel P₀, dit pixel touché, collecte un signal significatif, c'est-à-dire un signal supérieur à un seuil S prédéterminé, le circuit de traitement PROC élabore les opérations suivantes :
- détermination du signal collecté dans un groupe de comparaison C₀ associé au pixel touché P₀,
- détermination des pixels adjacents P₁ à P_{N} dudit pixel touché P₀
- détermination du signal collecté dans le groupe de comparaison C₁ à C_{N} associé à chaque pixel adjacent P₁ à P_{N} du pixel touché P₀,
- comparaison du signal collecté dans le groupe de comparaison C₀ associé au pixel P₀ avec le signal collecté dans le groupe de comparaison C₁ à C_{N} associé à chaque pixel adjacent P₁ à P_{N}.

Un pixel touché P₀ est déclaré « pixel gagnant » si le groupe de comparaison C₀ auquel il est associé recueille un signal plus élevé celui recueilli dans les groupes de comparaison C₁ à C_{N} associés à chacun des pixels P₁ à P_{N} qui lui sont adjacents.

Si au moins un groupe de comparaison C₁ à C_{N} associé à un pixel adjacent du pixel touché P₀ recueille davantage de signal que le groupe de comparaison C₀, le pixel touché P₀ n'est pas déclaré « pixel gagnant ».

Au cours d'une interaction, plusieurs pixels peuvent collecter simultanément un signal supérieur au seuil S. Le procédé décrit ci-dessus est de préférence mis en oeuvre pour chaque pixel touché suite à une interaction dans le détecteur.

Par pixels adjacents, on entend les N pixels les plus proches du pixel P₀, N étant un entier supérieur ou égal à 2. Il peut s'agir des 4 plus proches voisins (N = 4) ou des 6 plus proches voisins (N = 6), voire davantage. La valeur N dépend notamment de la taille des pixels. On comprend que plus cette taille est petite, plus une interaction est susceptible de générer un signal significatif dans un grand nombre de pixels adjacents.

Par signal collecté par un groupe de comparaison, on entend une valeur représentative du signal collecté par les différents pixels composant ce groupe. Il peut notamment s'agir de la somme des signaux collectés par les différents pixels composant le groupe. D'autres modes de détermination de la valeur représentative peuvent être mis en oeuvre. Il est par exemple possible de pondérer la valeur du signal émis par chacun des pixels du groupe.

Le seuil Si, au-delà duquel on considère que le pixel Pᵢ a collecté un signal, peut être une valeur déterminée expérimentalement au cours d'essais préliminaires, d'une valeur établie arbitrairement ou d'une valeur déterminée lors d'une phase de calibration, durant laquelle le détecteur n'est pas exposé à un rayonnement. Cette valeur peut être identique pour chaque pixel ou peut être une valeur Si associée à chaque pixel Pᵢ.

En cas d'égalité lors de la comparaison, on peut utiliser une règle de priorité prédéfinie, pour définir arbitrairement le groupe de comparaison ayant accumulé la quantité la plus importante de signal parmi les groupes de comparaison ayant participé à la comparaison. Le centre d'impact est par exemple défini comme le pixel dont le rang, en ligne ou en colonne est le plus faible. Plus précisément, si une comparaison entre deux pixels d'une même ligne conduit à une égalité, on peut privilégier celui dont le numéro de ligne est le plus faible. De même lors d'une comparaison de deux pixels d'une même colonne conduisant à une égalité, on peut privilégier celui dont le numéro de colonne est le plus faible.

Une caractéristique importante de l'invention est que les groupes associés à deux pixels adjacents pour réaliser la comparaison ne comportent aucun pixel en commun. Cela diminue le nombre de calculs à réaliser lors de la comparaison. Il en résulte une diminution de la consommation électrique du dispositif. De plus, cela peut permettre d'améliorer la fiabilité de la localisation de l'interaction. Un exemple simple permet de comprendre cet avantage. Dans chacun des groupes, on peut calculer une somme des valeurs des signaux collectés par chacun des pixels du groupe considéré. La comparaison des signaux collectés par chacun des groupes peut se faire en comparant les sommes des différents groupes. Le groupe ayant la somme la plus importante est celui qui a accumulé la quantité la plus importante de signal. La comparaison entre le groupe C₀ associé au pixel touché et chaque groupe Ci (1≤i≤N) associé aux N pixels adjacents, Ci (1≤i≤N) se fait facilement par soustraction des sommes et comparaison du résultat de la soustraction. Si deux groupes comparés comprennent un ou plusieurs pixels en commun, les poids des pixels communs aux deux groupes s'annulent lors de la soustraction. Si au contraire les groupes comparés ne comprennent aucun pixel en commun, la comparaison des deux groupes est effectuée sur la base de pixels différents et la pertinence du résultat n'en sera que meilleure.

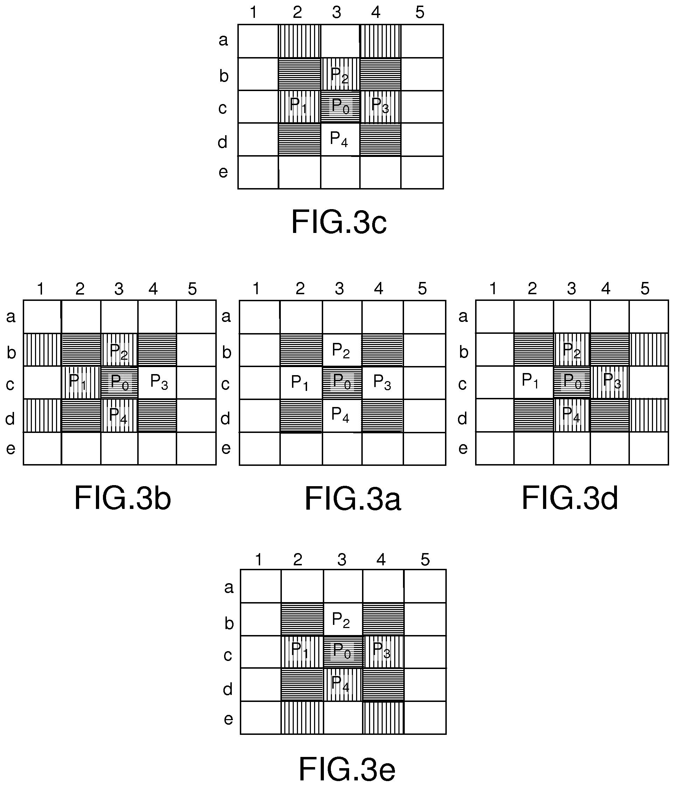

Les figures 3a à 3e permettent d'illustrer un exemple de différents groupes de pixels que l'on compare afin de déterminer un centre d'impact.

Pour simplifier la présentation, on se place dans une matrice de cinq lignes a, b, c, d, e et cinq colonnes 1, 2, 3, 4, 5. Encore une fois, il est bien entendu que les matrices réelles possèdent généralement un plus grand nombre de lignes et de colonnes. On considère cinq pixels donnés P₀, P₁, P₂, P₃ et P₄ dont les coordonnées dans la matrice sont respectivement c3, b3, d3, c4 et c2. On suppose qu'à un instant t, le pixel P₀ détecte un signal supérieur à un seuil et devient un pixel dit touché. A chacun des pixels donnés, on associe un groupe comprenant le pixel donné et quatre autres pixels adjacents disposés en diagonale par rapport au pixel donné. Par exemple pour le pixel P₀, le groupe C₀ qui lui est associé comprend le pixel P₀ et les pixels dont les coordonnées sont b2, b4, d2 et d4. Le groupe C₀ est représenté dans une matrice schématisée par des cases hachurée horizontalement dans les figures 3a à 3e.

L'organisation géométrique des pixels de ce groupe C₀ forme un motif que l'on peut déplacer pour définir des groupes C₁ à C₄ associés à chacun des pixels adjacents P₁, P₂, P₃ et P₄ du pixel P₀. Le groupe C₀ associé au pixel touché P₀ et le groupe C₁ associé au pixel adjacent P₁ sont représentés en figure 3b. Les motifs des deux groupes C₀, C₁ sont choisis pour éviter qu'ils ne comprennent des pixels en commun. En figure 3c, on a représenté une autre duplication de la matrice schématisée dans laquelle les groupes C₀ et C₂ respectivement associés au pixel touché P₀ et au pixel adjacent P₂ sont représentés. Les groupes C₀ et C₃ respectivement associés au pixel touché P₀ et au pixel adjacent P₃ sont représentés en figure 3d et les groupes C₀, C₄ associés au pixel touché P₀ et au pixel adjacent P₄ sont représentés en figure 3e. Sur les figures 3b à 3e, les groupes C₁ à C₄ sont représentés par des cases hachurées verticalement.

Pour chaque groupe, on calcule la somme des valeurs des signaux de chacun des pixels du groupe considéré. On compare alors, deux à deux, la somme correspondant au groupe associé au pixel touché P₀ à la somme correspondant à chaque groupe adjacent du pixel P₀. Plus précisément, dans l'exemple représenté, une comparaison des groupes C₀ et C₁ respectivement associés aux pixels P₀ et P₁ est illustrée en figure 3b. La figure 3c illustre la comparaison des groupes C₀ et C₂ respectivement associés aux pixels P₀ et P₂. La figure 3d illustre la comparaison des groupes C₀ et C₃ respectivement associés aux pixels P₀ et P₃. La figure 3e illustre la comparaison des groupes C₀ et C₄ respectivement associés aux pixels P₀ et P₄. Ainsi, on effectue autant de comparaison que de pixels adjacents, soit quatre comparaisons. Seuls les groupes ne comprenant aucun pixel en commun sont comparés entre eux.

Dans l'exemple représenté à l'aide figures 3a à 3e plusieurs cas de figures peuvent se présenter en fonction des résultats des différentes comparaisons. Si le groupe associé au pixel touché P₀ possède une somme de valeur supérieure à chacune des sommes de valeurs des quatre autres groupes associés chacun aux pixels adjacents P₁, P₂, P₃, et P₄ alors le pixel touché P₀ est déclaré pixel gagnant. Si au contraire certaines comparaisons donnent le groupe associé au pixel touché P₀ comme ayant une somme de valeur supérieure aux valeurs de groupes associés à certains pixels adjacents et d'autres comparaisons donnent un résultat inverse, le pixel P₀ n'est pas le pixel gagnant.

Autrement dit, un pixel touché est déclaré pixel gagnant si en comparant son groupe de comparaison à tous les groupes de comparaison associés à chacun des pixels qui lui sont adjacents, tous les résultats des différentes comparaisons donnent le pixel touché comme ayant accumulé la quantité la plus importante de signal. Dans cet exemple deux pixels sont considérés comme adjacents si ils sont voisins immédiats et qu'ils sont situés tous deux sur la même ligne ou sur la même colonne de la matrice de pixel. A titre d'alternative, l'adjacence peut être définie de façon plus large, par exemple en incluant des pixels immédiatement voisins et situés sur une diagonale de la matrice passant par le pixel central, voire des pixels voisins des pixels dits immédiatement voisin.

Avantageusement, on attribue au pixel gagnant une valeur de signal fonction des valeurs de signal des pixels d'un groupe de pixels situés au voisinage du pixel gagnant. Ce groupe de pixel est appelé groupe d'attribution. Il peut être le groupe de comparaison associé au pixel gagnant. Cela permet de simplifier les calculs et de réutiliser un calcul de somme déjà effectué. Alternativement, le groupe d'attribution diffère du groupe de comparaison associé au pixel gagnant. En effet, le motif retenu pour les différents groupes de comparaison peut comporter des trous permettant d'éviter les pixels en commun lors des différentes comparaisons. On peut inclure dans le groupe d'attribution un plus grand nombre de pixels que le nombre de pixel des différents groupes de comparaison. Il est bien entendu que les différents groupes de comparaison ont le même nombre de pixels. Dans l'exemple des figures 3a à 3e, si le pixel touché P₀ est le pixel gagnant, le groupe d'attribution associé au pixel P₀ peut comprendre tous les pixels du groupe de comparaison associé au pixel P₀ ainsi que les pixels P₁, P₂, P₃ et P₄. Les groupes de comparaison possèdent 5 pixels et le groupe d'attribution possède dans ce cas 9 pixels. Le motif et les dimensions, exprimées en nombre de pixels, du groupe d'attribution sont définis expérimentalement de façon à être représentatifs de l'éparpillement des photons visibles autour d'un centre d'impact. Il en est de même pour les motifs et les dimensions des groupes de comparaison.

La valeur de signal attribuée au pixel gagnant peut être la somme des valeurs des signaux de tous les pixels du groupe d'attribution. Cette somme peut être une somme simple ou éventuellement une somme pondérée permettant de tenir compte d'éventuels bruits pour les pixels du groupe d'attribution les plus éloignés du pixel gagnant.

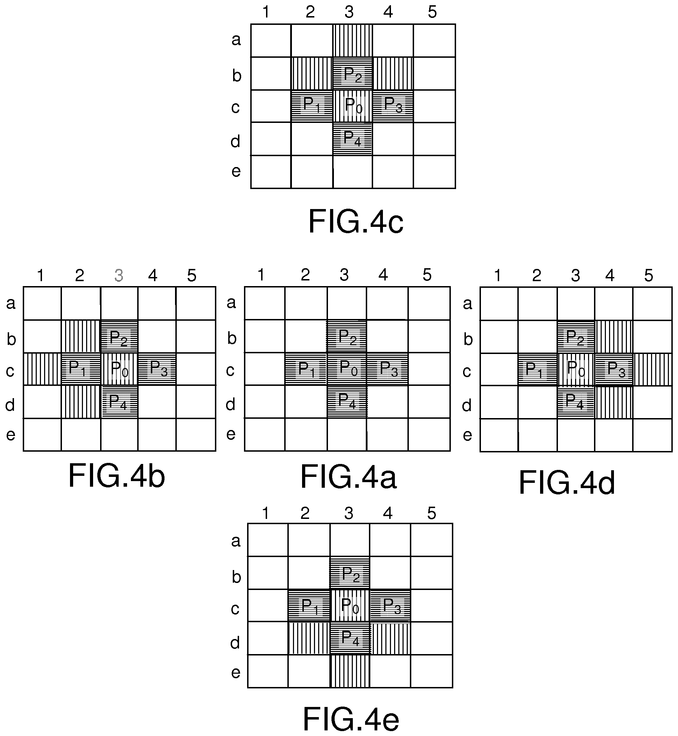

Les figures 4a à 4e permettent d'illustrer un autre exemple de groupes de comparaison et de groupe d'attribution. Comme pour les figures 3a à 3e, on se place dans une matrice de cinq lignes a, b, c, d, e et cinq colonnes 1, 2, 3, 4, 5. La particularité des groupes de comparaisons de cet exemple est qu'ils ne comprennent pas le pixel auquel ils sont associés. Par exemple, le groupe associé au pixel touché P₀ ne comprend que les pixels adjacents P₁, P₂, P₃ et P₄ et pas le pixel touché P₀. Ce groupe de comparaison est visible sur les figures 4b à 4e. Comme précédemment le motif des différents groupes de comparaison reste identique quelque soit le pixel associé. Par exemple, le groupe de comparaison C₁ associé au pixel adjacent P₁ est visible sur la figure 4b et comprend les pixels c1, b2, c3 et d2. Il en est de même pour le groupe de comparaison C₂ associé au pixel adjacent P₂ visible sur la figure 4c, pour le groupe de comparaison C₃ associé au pixel adjacent P₃ visible sur la figure 4d et pour le groupe de comparaison C₄ associé au pixel adjacent P₄ visible sur la figure 4e.

Comme précédemment, seuls les groupes ne comprenant aucun pixel en commun sont comparés entre eux. Dans l'exemple représenté sur figures 4a à 4e, la comparaison entre le groupe Coassocié au pixel touché P₀ et le groupe C₁ associé au pixel adjacent P₁ est représentée sur la figure 4b, la comparaison entre le groupe C₀ associé au pixel P₀ et le groupe C₂ associé au pixel adjacent P₂ est représentée sur la figure 4c, la comparaison entre le groupe C₀ associé au pixel touché P₀ et le groupe C₃ associé au pixel adjacent P₃ est représentée sur la figure 4d et la comparaison entre le groupe C₀ associé au pixel touché P₀ et le groupe C₄ associé au pixel adjacent P₄ est représentée sur la figure 4e.

En supposant que le résultat des quatre comparaisons donne le pixel touché P₀ comme gagnant, le groupe d'attribution associé au pixel P₀ comprend tous les pixels du groupe de comparaison associé au pixel P₀ auxquels on ajoute le pixel P₀. Ce groupe d'attribution est représenté sur la figure 4a.

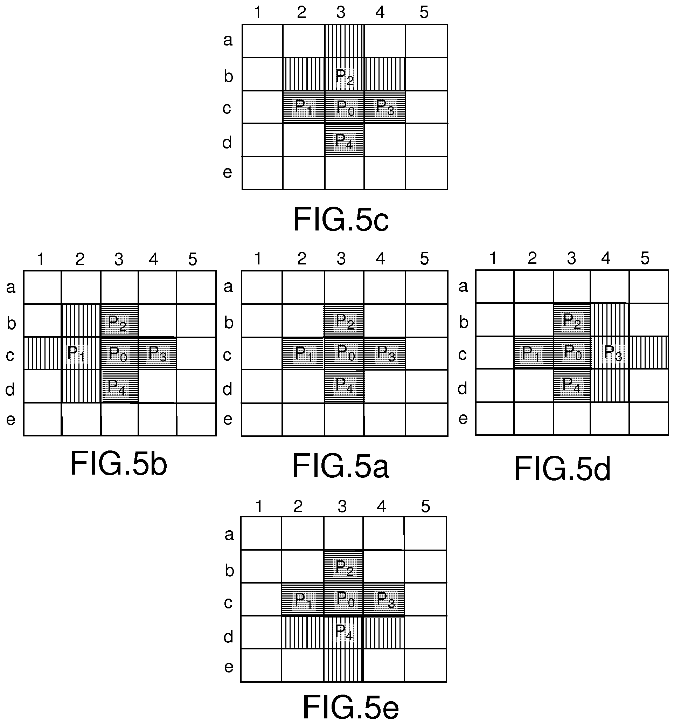

Les figures 5a à 5e permettent d'illustrer un exemple de formation de groupes de comparaison à motifs variables. Plus précisément, les groupes de comparaison sont organisés selon un motif de pixels et pour deux pixels distincts donnés, le motif de leur groupe varie fonction de l'orientation relative des deux pixels donnés.

La figure 5b représente deux groupes de comparaison, l'un associé au pixel touché P₀ et l'autre au pixel adjacent P₁. Le groupe C₀ associé au pixel touché P₀ comprend les pixels 3b, 3c, 3d et 4c. Le groupe C₁ associé au pixel adjacent P₁ comprend les pixels 1c, 2b, 2c et 2d.

La figure 5c représente deux groupes de comparaison, l'un associé au pixel touché P₀ et l'autre au pixel adjacent P₂. Le groupe C₀ associé au pixel P₀ comprend les pixels 2c, 3c, 4c et 3d. Le groupe C₂ associé au pixel adjacent P₂ comprend les pixels touchés 3a, 2b, 3b et 4b.

La figure 5d représente deux groupes de comparaison, l'un associé au pixel touché P₀ et l'autre au pixel adjacent P₃. Le groupe C₀ associé au pixel touché P₀ comprend les pixels 2c, 3b, 3c et 3d. Le groupe C₃ associé au pixel adjacent P₃ comprend les pixels 4b, 4c, 4d et 5c.

La figure 5e représente deux groupes de comparaison, l'un associé au pixel touché P₀ et l'autre au pixel adjacent P₄. Le groupe C₀ associé au pixel touché P₀ comprend les pixels 3b, 2c, 3c et 4c. Le groupe C₄ associé au pixel adjacent P₄ comprend les pixels 2d, 3d, 4d et 3e.

Dans les comparaisons représentées aux figures 5b, 5c, 5d et 5e, les groupes comparés C₀ et Cᵢ (1≤i≤N=4) deux à deux, n'ont aucun pixel en commun.

En supposant que le résultat des quatre comparaisons donne le pixel touché P₀ comme gagnant, le groupe d'attribution associé au pixel X et représenté sur la figure 5a comprend les pixels 2c, 3b, 3c, 3d et 4c. Comme dans l'exemple des figures 4a à 4e, le groupe d'attribution représenté sur la figure 5a comprend un plus grand nombre de pixels que les différents groupes de comparaison associés au pixel P₀.

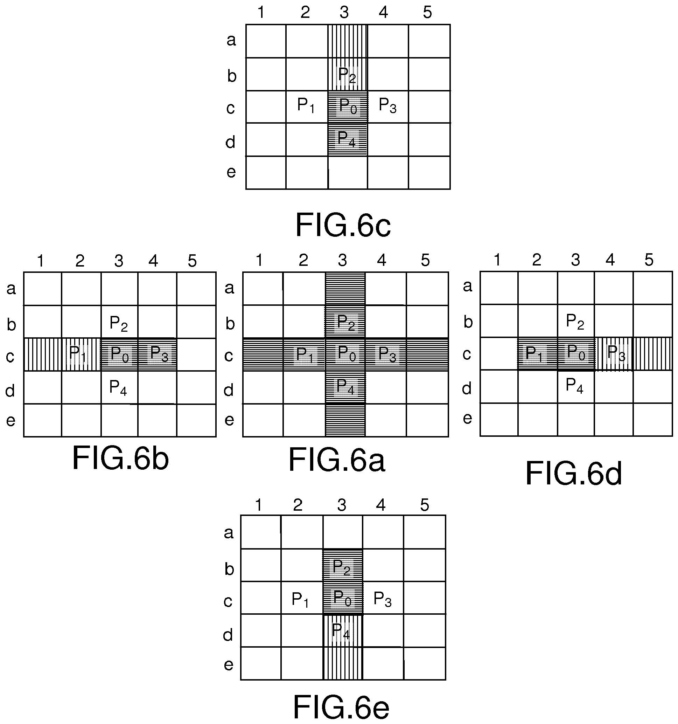

Les figures 6a à 6e permettent d'illustrer un autre exemple de formation de groupes de comparaison à motifs variables dans lequel, on limite les calculs lors du cumul réalisé pour déterminer la valeur de signal affectée au pixel gagnant. Plus précisément, on utilise les valeurs de signal des groupes de comparaison ayant contribué à déterminer le pixel gagnant dans l'attribution de valeur de signal au pixel gagnant. Autrement dit, pour déterminer la valeur de signal attribuée au pixel gagnant, on réduit le besoin de revenir aux valeurs individuelles des différents pixels du groupe d'attribution et on réutilise les sommes déjà calculées pour les groupes de comparaison. Ceci permet de limiter les calculs en réutilisant pour l'attribution des calculs déjà fait lors de l'étape de comparaison.

La figure 6b représente deux groupes de comparaison, l'un associé au pixel touché P₀ et l'autre au pixel adjacent P₁. Le groupe C₀ associé au pixel touché P₀ comprend les pixels 3c et 4c. Le groupe C₁ associé au pixel adjacent P₁ comprend les pixels 1c et 2c.

La figure 6c représente deux groupes de comparaison, l'un associé au pixel touché P₀ et l'autre au pixel adjacent P₂. Le groupe C₀ associé au pixel touché P₀ comprend les pixels 3c et 3d. Le groupe C₂ associé au pixel adjacent P₂ comprend les pixels 3a et 3b.

La figure 6d représente deux groupes de comparaison, l'un associé au pixel touché P₀ et l'autre au pixel adjacent P₃. Le groupe C₀ associé au pixel touché P₀ comprend les pixels 2c et 3c. Le groupe C₃ associé au pixel P₃ comprend les pixels 4c et 5c.

La figure 6e représente deux groupes de comparaison, l'un associé au pixel touché P₀ et l'autre au pixel adjacent P₄. Le groupe C₀ associé au pixel touché P₀ comprend les pixels 3b et 3c. Le groupe C₄ associé au pixel adjacent P₄ comprend les pixels 3d et 3e.

Comme précédemment, les comparaisons représentées aux figures 6b, 6c, 6d et 6e, les groupes comparés Cᵢ (1≤i≤N=4) n'ont aucun pixel en commun avec le groupe C₀ associé au pixel P₀.

En supposant que le résultat des quatre comparaisons donne le pixel P₀ comme pixel gagnant, le groupe d'attribution, associé au pixel P₀ et représenté sur la figure 6a, comprend les pixels 1c, 2c, 3a, 3b, 3c, 3d 3e, 4c et 4d. Le groupe d'attribution représenté sur la figure 6a comprend un plus grand nombre de pixels que les différents groupes de comparaison associés au pixel gagnant P₀. Pour déterminer la valeur de signal attribuée au pixel gagnant, on effectue la somme des valeurs de signal des groupes de comparaison perdant, c'est-à-dire les groupes de comparaison associés aux pixels P₁, P₂, P₃ et P₄. On ajoute à cette somme la valeur de signal du pixel gagnant P₀. On obtient ainsi, en additionnant 5 valeurs, la somme cumulée des signaux des 9 pixels du groupe d'attribution.

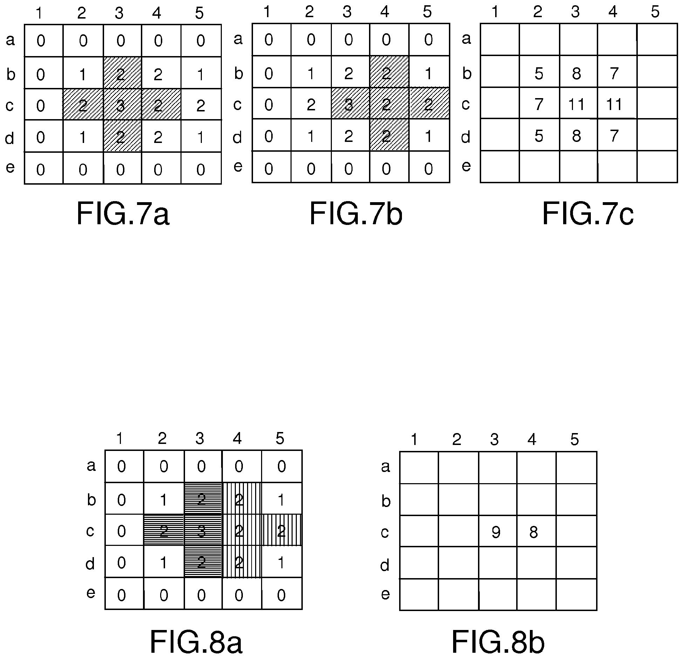

Les figures 7a, 7b, 7c, 8a et 8b permettent d'illustrer un avantage obtenu grâce à l'invention. Comme précédemment on se place dans une matrice de cinq lignes a, b, c, d, e et de cinq colonnes 1, 2, 3, 4, 5. Pour chaque pixel de la matrice, Sur les figures 7a, 7b et 8a on a indiqué pour chaque pixel une quantité de signal enregistré. A des fins de simplification, cette quantité est exprimée par des nombres entiers. Les matrices des trois figures 7a, 7b et 8a reçoivent les mêmes quantités de signal. La différence entre ces trois matrices réside dans les groupes de comparaison choisis. Les groupes de comparaisons représentés sur les figures 7a et 7b ne mettent pas en oeuvre l'invention. Sur la figure 7a, le groupe de comparaison associé au pixel c3 comprend les pixels b3, c2, c3, c4 et d3. Sur la figure 7b, le groupe de comparaison associé au pixel c4 comprend les pixels b4, c3, c4, c5 et d4. Ces deux groupes possèdent des pixels en commun : c3 et c4. La quantité de signal cumulée dans chaque groupe de comparaison est représentée sur la figure 7c. Pour les deux groupes associés aux pixels c3 et c4, la somme cumulée est égale à 11. Il y a donc une indétermination. On est dans l'incapacité de déterminer le pixel gagnant. Pour mémoire, on a également reporté les sommes de groupes de comparaison de même forme pour les pixels b2, b3, b4, c2, d2, d3 et d4.

La figure 8a représente des groupes de comparaisons conforme à l'invention et respectivement associés aux pixels c3 et c4, selon les exemples représentés sur la figure 5b. Plus précisément, le groupe de comparaison associé au pixel c3 comprend les pixels b3, c2, c3 et d3. Le groupe de comparaison associé au pixel c4 comprend les pixels b4, c5, c4 et d4. La quantité de signal cumulée dans chaque groupe de comparaison est représentée sur la figure 8b. Pour le groupe associé au pixel c3, la somme cumulée est égale à 9 et pour le groupe associé au pixel c4, la somme cumulée est égale à 8. On est ici capable de déterminer que le pixel c3 est le pixel gagnant.

L'exemple illustré à l'aide des figures 8a et 8b montre que le choix de groupes de comparaison ne comportant pas de pixel en commun permet une détermination plus fiable du pixel gagnant. Or, ce pixel représente la position la plus probable de l'interaction dans le détecteur 10. On comprend alors que l'invention permet d'améliorer la résolution spatiale du détecteur.

## Revendications

1. Procédé de traitement de signaux collectés par des pixels d'un détecteur (10), chaque pixel étant apte à collecter un signal sous l'effet d'un rayonnement auquel est soumis le détecteur, **caractérisé en ce qu'**il consiste à:
• identifier un pixel (P₀), dit pixel touché, collectant un signal supérieur à un seuil (S),
• définir au moins un pixel adjacent (P₁...P_{N}) du pixel touché (P₀),
• et, pour chaque pixel adjacent (P₁...P_{N}) :
▪ sélectionner un premier groupe de comparaison (C₀) associé audit pixel touché (P₀) et un deuxième groupe de comparaison (C₁...C_{N}) associé audit pixel adjacent (P₁...P_{N}), chaque groupe de comparaison (C₀...C_{N}) comportant une pluralité de pixels, lesdits premier et deuxième groupes de comparaison ne comportant aucun pixel en commun,
▪ déterminer un signal collecté par chacun des groupes de comparaison (C₀...C_{N}), le signal collecté par chacun des groupes de comparaison correspondant à une valeur représentative des signaux collectés par les différents pixels dudit chacun des groupes,
▪ comparer les signaux collectés par chaque groupe de comparaison (C₀), (C₁...C_{N}) de façon à déterminer le groupe de comparaison ayant collecté le signal le plus élevé,
• déclarer ledit pixel touché en tant que pixel gagnant si le groupe (C₀) associé au pixel touché (P₀) présente un signal collecté supérieur au signal collecté par chaque groupe (Cᵢ) associé à un pixel adjacent (Pₗ) dudit pixel touché (P₀).

2. Procédé selon la revendication 1, **caractérisé en ce que** le signal collecté par chaque groupe de comparaison (C₀ ,C₁...C_{N}) correspond à la somme des signaux collectés par les pixels constituant ledit groupe.

3. Procédé selon l'une des revendications 1 ou 2, **caractérisé en ce qu'**en cas d'égalité lors de la comparaison, on utilise une règle de priorité prédéfinie, pour définir arbitrairement le groupe de comparaison (C₀, C₁...C_{N}) ayant accumulé la quantité la plus importante de signal parmi les groupes de comparaison (C₀, C₁...C_{N}) ayant participé à la comparaison.

4. Procédé selon l'une des revendications précédentes, **caractérisé en ce que** les groupes de comparaison (C₀, C1...C_{N}) sont organisés selon un motif de pixels (P₀...P_{N}) et **en ce que** pour deux pixels distincts donnés, le motif de leur groupe de comparaison varie en fonction de l'orientation relative des deux pixels donnés (FIG 5 et 6).

5. Procédé selon l'une des revendications précédentes, **caractérisé en ce que** chaque groupe de comparaison (C₀, C1...C_{N}) comprend le même nombre de pixels.

6. Procédé selon l'une des revendications précédentes, **caractérisé en ce qu'**il consiste à attribuer au pixel gagnant (P₀), une valeur de signal fonction des valeurs de signal des pixels d'un groupe de pixels appelé groupe d'attribution, les pixels du groupe d'attribution comportant des pixels adjacents du pixel gagnant.

7. Procédé selon la revendication 6, **caractérisé en ce que** le groupe d'attribution est le groupe de comparaison (C₀) associé au pixel gagnant (P₀).

8. Procédé selon la revendication 6, **caractérisé en ce que** le groupe d'attribution est différent du groupe de comparaison (C₀) associé audit pixel gagnant (P₀).

9. Procédé selon la revendication 8, **caractérisé en ce que** le groupe d'attribution comprend un plus grand nombre de pixels que le groupe de comparaison (C₀) associé au pixel gagnant (P₀).

10. Procédé selon la revendication 8, **caractérisé en ce qu'**on utilise les valeurs de signal des groupes de comparaison (C₀, C1...C_{N}) ayant contribué à déterminer le pixel gagnant (P₀) pour l'attribution de valeur de signal au pixel gagnant (P₀).

## Patentansprüche

1. Verfahren zum Verarbeiten von Signalen, die von Pixeln eines Detektors (10) erfasst werden, wobei jedes Pixel in der Lage ist, ein Signal unter der Wirkung einer Strahlung zu erfassen, der der Detektor ausgesetzt ist, **dadurch gekennzeichnet, dass** es aus dem Folgenden besteht:
• Identifizieren eines Pixels (P₀), das als betroffenes Pixel bezeichnet wird, das ein Signal oberhalb eines Schwellenwerts (S) erfasst,
• Definieren von mindestens einem benachbarten Pixel (P₁...P_{N}) des betroffenen Pixels (P₀), und
• für jedes benachbarte Pixel (P₁...P_{N}):
▪ Auswählen einer ersten Vergleichsgruppe (C₀), die mit dem betroffenen Pixel (P₀) assoziiert ist, und einer zweiten Vergleichsgruppe (C₁...C_{N}), die mit dem benachbarten Pixel (P₁...P_{N}) assoziiert ist, wobei jede Vergleichsgruppe (C₀...C_{N}) eine Vielzahl von Pixeln umfasst, wobei die erste und zweite Vergleichsgruppe kein gemeinsames Pixel umfassen,
▪ Bestimmen eines Signals, das von jeder der Vergleichsgruppen (C₀...C_{N}) erfasst wird, wobei das erfasste Signal von jeder der Vergleichsgruppen einem Wert entspricht, der repräsentativ für die Signale ist, die von den verschiedenen Pixeln von jeder der Gruppen erfasst werden,
▪ Vergleichen der erfassten Signale durch jede Vergleichsgruppe (C₀), (C₁...C_{N}), um die Vergleichsgruppe zu bestimmen, die das höchste Signal erfasst hat,
• Erklären des betroffenen Pixels zum Gewinnerpixel, wenn die Gruppe (C₀), die mit dem betroffenen Pixel (P₀) assoziiert ist, ein erfasstes Signal aufweist, das höher als das Signal ist, das von jeder Gruppe (C₁) erfasst wird, die mit einem benachbarten Pixel (P₁) des betroffenen Pixels (P₀) assoziiert ist.

2. Verfahren nach Anspruch 1, **dadurch gekennzeichnet, dass** das erfasste Signal durch jede Vergleichsgruppe (C₀, C₁...C_{N}) der Summe der erfassten Signale durch die Pixel entspricht, die die Gruppe bilden.

3. Verfahren nach einem der Ansprüche 1 oder 2, **dadurch gekennzeichnet, dass** im Fall einer Gleichheit bei dem Vergleich eine vordefinierte Prioritätsregel verwendet wird, um willkürlich die Vergleichsgruppe (C₀, C₁...C_{N}) zu definieren, die die bedeutendste Signalmenge unter den Vergleichsgruppen (C₀, C₁...C_{N}), die an dem Vergleich teilgenommen haben, akkumuliert hat.

4. Verfahren nach einem der vorherigen Ansprüche, **dadurch gekennzeichnet, dass** die Vergleichsgruppen (C₀, C₁...C_{N}) gemäß einem Pixelmuster (P₀...P_{N}) organisiert sind, und dass für zwei jeweilige verschiedene Pixel das Muster ihrer Vergleichsgruppe abhängig von der relativen Ausrichtung der zwei jeweiligen Pixel variiert (FIG. 5 und 6).

5. Verfahren nach einem der vorherigen Ansprüche, **dadurch gekennzeichnet, dass** jede Vergleichsgruppe (C₀, C₁...C_{N}) die gleiche Anzahl von Pixeln umfasst.

6. Verfahren nach einem der vorherigen Ansprüche, **dadurch gekennzeichnet, dass** es darin besteht, dem Gewinnerpixel (P₀) einen Signalwert abhängig von den Signalwerten der Pixel einer Pixelgruppe zuzuweisen, die als die Zuweisungsgruppe bezeichnet wird, wobei die Pixel der Zuweisungsgruppe benachbarte Pixel des Gewinnerpixels umfassen.

7. Verfahren nach Anspruch 6, **dadurch gekennzeichnet, dass** die Zuweisungsgruppe die Vergleichsgruppe (C₀) ist, die mit dem Gewinnerpixel (P₀) assoziiert ist.

8. Verfahren nach Anspruch 6, **dadurch gekennzeichnet, dass** die Zuweisungsgruppe von der Vergleichsgruppe (C₀) verschieden ist, die mit dem Gewinnerpixel (P₀) assoziiert ist.

9. Verfahren nach Anspruch 8, **dadurch gekennzeichnet, dass** die Zuweisungsgruppe eine größere Anzahl an Pixeln umfasst als die Vergleichsgruppe (C₀), die mit dem Gewinnerpixel (P₀) assoziiert ist.

10. Verfahren nach Anspruch 8, **dadurch gekennzeichnet, dass** die Signalwerte der Vergleichsgruppen (C₀, C₁...C_{N}), die zum Bestimmen des Gewinnerpixels (P₀) beigetragen haben, zur Zuweisung des Signalwerts zum Gewinnerpixel (P₀) verwendet werden.

## Claims

1. A method for processing signals collected by pixels of a detector (10), each pixel being able to collect a signal under the effect of radiation experienced by the detector, **characterised in that** it comprises:
• identifying a pixel (P₀), called affected pixel, collecting a signal higher than a threshold (S);
• defining at least one adjacent pixel (P₁...P_{N}) of the affected pixel (P₀); and
• for each adjacent pixel (P₁...P_{N}):
▪ selecting a first comparison group (C₀) associated with said affected pixel (P₀) and a second comparison group (C₁...C_{N}) associated with said adjacent pixel (P₁...P_{N}), each comparison group (C₀...C_{N}) comprising a plurality of pixels, said first and second comparison groups not comprising any pixel in common;
▪ determining a signal collected by each of the comparison groups (C₀...C_{N}), the signal collected by each of the comparison groups corresponding to a value representing the signals collected by the various pixels of each of said groups;
▪ comparing the signals collected by each comparison group (C₀), (C₁...C_{N}) so as to determine the comparison group that collected the highest signal;
• declaring said affected pixel to be the winning pixel if the group (C₀) associated with the affected pixel (P₀) has a collected signal higher than the signal collected by each group (Cᵢ) associated with an adjacent pixel (Pₗ) of said affected pixel (P₀).

2. The method according to claim 1, **characterised in that** the signal collected by each comparison group (C₀, C₁...C_{N}) corresponds to the sum of the signals collected by the pixels forming said group.

3. The method according to any one of claims 1 to 2, **characterised in that** in the event of equality during the comparison, a predefined priority rule is used to arbitrarily define the comparison group (C₀, C₁...C_{N}) that has accumulated the largest amount of signal from among the comparison groups (C₀, C₁...C_{N}) that participated in the comparison.

4. The method according to any one of the preceding claims, **characterised in that** the comparison groups (C₀, C₁...C_{N}) are organised according to a pattern of pixels (P₀...P_{N}) and **in that**, for two given distinct pixels, the pattern of their comparison group varies as a function of the relative orientation of the two given pixels (FIG. 5 and 6).

5. The method according to any one of the preceding claims, **characterised in that** each comparison group (C₀, C₁...C_{N}) comprises the same number of pixels.

6. The method according to any one of the preceding claims, **characterised in that** it comprises allocating a signal value to the winning pixel (P₀) that is a function of the signal values of the pixels of a group of pixels, called allocation group, the pixels of the allocation group comprising adjacent pixels of the winning pixel.

7. The method according to claim 6, **characterised in that** the allocation group is the comparison group (C₀) associated with the winning pixel (P₀).

8. The method according to claim 6, **characterised in that** the allocation group differs from the comparison group (C₀) associated with said winning pixel (P₀).

9. The method according to claim 8, **characterised in that** the allocation group comprises a larger number of pixels than the comparison group (C₀) associated with said winning pixel (P₀).

10. The method according to claim 8, **characterised in that** the signal values of the comparison groups (C₀, C₁...C_{N}) are used that helped to determine the winning pixel (P₀) for allocating a signal value to the winning pixel (P₀).
